# EUROPEAN PATENT SPECIFICATION

(11) **EP 2 142 006 B1**
(45) Date of publication and mention of the grant of the patent: **19.04.2017**
(21) Application number: 08735513.7
(22) Date of filing: 27.03.2008
(51) Int. Cl.: A23P 20/20, A23C 9/13, A23C 9/156, A23C 19/09, A23G 9/28, B65B 39/00, A23C 9/133, A23P 30/25

(54) **PROCESS AND DEVICE FOR PRODUCING A CHILLED DESSERT ITEM CONTAINING A CRUNCHY COMPOSITION ARRANGED IN SUPERIMPOSED LAYERS IN ITS MASS**
VERFAHREN UND VORRICHTUNG ZUR HERSTELLUNG EINES KALTDESSERTS MIT IN ÜBERLAGERTEN SCHICHTEN IN SEINER MASSE ANGEORDNETER KNUSPRIGER ZUSAMMENSETZUNG
PROCÉDÉ ET DISPOSITIF POUR PRODUIRE UN DESSERT RÉFRIGÉRÉ CONTENANT UNE COMPOSITION CROUSTILLANTE DISPOSÉE EN COUCHES SUPERPOSÉES DANS SA MASSE

(30) Priority: 03.04.2007 FR 0754252
(43) Date of publication of application: 13.01.2010
(73) Proprietor: Nestec S.A., 1800 Vevey (CH)
(72) Inventor: MOREAU, Jean, F-14340 Manerbe (FR); CORDRAY, Ann-Gaël, F-14340 Le Pre D'auge (FR); SWERTVAEGHER, François, F-14100 Courtonne La Meurdrac (FR)
(74) Representative: Cogniat, Eric Jean Marie
(86) International application number: PCT/EP2008/053629
(87) International publication number: WO 2008/119731

(56) References cited:
- EP-A- 0 221 757
- EP-A- 0 738 472
- EP-A- 0 853 888
- EP-A- 0 928 560
- EP-A- 1 518 465
- EP-A1- 0 434 857
- EP-A1- 1 348 340
- EP-A1- 1 657 159
- WO-A-96/17786
- WO-A-2006/046139
- DE-A1- 3 503 058
- DE-A1-102006 015 638
- GB-A- 1 271 050
- JP-A- 9 172 977
- NL-C2- 1 015 261
- US-A- 4 015 644
- US-A- 5 415 534
- US-B1- 6 790 466
- DATABASE WPI Week 200450 Thomson Scientific, London, GB; AN 2004-521735 XP002487791 & JP 2004 201510 A (ROTTESUNO CO LTD) 22 July 2004 (2004-07-22)

## Description

### Field of the invention

The invention relates to a process for producing a chilled dessert item containing a crunchy composition arranged in superimposed layers in its mass.

It relates more particularty to a chilled product comprising at least two products, at least one of them being a fresh milk product of cream or mousse type and the other sweating of a chocolate that is crunchy in nature after cooling.

The invention also relates to the dessert item obtained by means of this production process.

### Background of the invention

Fresh multilayer products containing at least one layer of chocolate pieces are already known on the market. Thus, for example, document WO 2006/046151 proposes injecting a discontinuous stream of chocolate into a pot into which a stream of milk base is also injected.

The injection is carried out such that the layer of chocolate pieces contains chocolate pieces that are isolated or connected to one another in such a way as to form a layer or a three-dimensional structure that is discontinuous. In this document, the term "discontinuous" is intended to mean that the chocolate pieces are connected to one another while forming bores which reveal the lower layer of product. In other words, the corresponding layer is not continuous. The recommended technique for injecting the chocolate in this document is spotting, i.e. injection of a metered amount of liquid chocolate which solidifies in the form of shavings or filaments.

Moreover, this document teaches carrying out the metering at relatively low temperatures, i.e. just above the freezing point of the milk product and up to a maximum of 12°C for said product, and just above the melting point for the chocolate. Although this proves to be advantageous from the point of view of product malleability and due to the fact that the molten chocolate solidifies instantaneously on contact with the milk product, these advantages are extremely difficult to control at the industrial stage, because of the destruction of the texturing agents when the crystallization stage is reached, because of the need to carefully insulate the pipework and because of the risk of the chocolate solidifying in the pipes or metering nozzles.

WO 2006/046139 discloses a process for preparing a yoghurt containing crunchy chocolate pieces, the process comprising injecting a ribbon of previously cooled chocolate into a sweetened and flavoured yoghurt via a nozzle. Further to solidification in a linear pipe and cooling of the chocolate to a temperature < 12 °C, the chocolate ribbon is milled and the resulting product therefore comprises chocolate pieces (from the milling/cutting of the chocolate ribbon). Document EP 0 615 692 proposes, moreover, the production of a chilled product based on at least one mousse containing chocolate pieces.

The present invention aims to provide the consumer with a novel chilled product based on a cream or a mousse and on chocolate that is crunchy in nature after cooling, which appears to be a succession of superimposed layers of dairy cream or mousse and of thin layers or sheets of chocolate constituting as many crunchy layers.

Processes and apparatuses for producing a dessert item containing sheets of crunchy composition in its mass indeed exist, such as those described, for example, in documents EP 0 485 654 and EP 0 434 857, but they are, in practice, limited to iced confectionary products. In fact, a milk product, such as a mousse or a cream, does not have a malleable texture like that of an overrun product (ice cream, in the same way as sorbet) which, when metered at a negative temperature generally of between -2 and -6°C, contains a considerable portion of water in the frozen state. In addition, the added product, such as the molten chocolate, is not able to solidify instantaneously by coming into contact with a product at negative temperature. With this type of process, it is therefore driven from the centre to the periphery of the pot, during filling, by the more viscous milk product, sticks to the pot and rises to the top as the filling takes place.

The processes and apparatuses suitable for the production of cold desserts are therefore generally limited, because of the above, to adding products which are relatively viscous. Thus, for example, document EP 1 348 340 proposes the production of a milk product with stripes of a non-milk base, such as a fruit pulp, the viscosity of which is between 3500 and 6000 cPs (1 cPs = 1 × 10-3 Pa.s).

It is also worth reporting, with respect to this document, that the technology proposed by the latter is limited to obtaining lateral stripes, trapped between the milk product and the pot.

Document EP 0 770 332 proposes, in order to add one or more horizontal layers of crunchy chocolate type on or in a product, such as a mousse or a cream, producing the layer(s) by spraying, the dessert base (product) being obtained by multi-metering. Such technology is complex and requires the use of several metering devices.

The present invention aims to improve processes and devices of this type.

### Summary of the invention

To this effect, the present invention proposes a process for producing a chilled dessert item containing a crunchy composition arranged in superimposed layers in its mass, comprising the following steps:
- a helical ribbon of milk, cereal-based, vegetable-based or fruit-based, product is continuously metered through a product outlet orifice of a metering nozzle, preferably into a packaging such as a pot;
- a layer of molten substance intended to form the crunchy composition after cooling is applied, to the helical ribbon being formed, continuously from the beginning of it being formed to the end of it being metered, by metering through at least one molten substance outlet orifice of said metering nozzle; and
- the helical layer of molten substance thus being formed is trapped between the first ribbon of milk, cereal-based, vegetable-based or fruit-based, product and a second helical ribbon of milk, cereal-based, vegetable-based or fruit-based, product, by concomitantly and continuously metering the second ribbon of product through a second product outlet orifice of the metering nozzle, such that said second ribbon is deposited onto the helical layer of molten substance being formed, simultaneously with the molten substance coming into contact with the first helical ribbon being formed.

By "milk product" (or "milk-based product"), it is meant a chilled product based on animal milk, or alternatively, a vegetable-based milk such as for instance a juice obtained from soy (i.e. "soy-milk"), nut, hazelnut, almond, etc.

By virtue of these arrangements, the molten substance is trapped between two layers of milk, cereal-based, vegetable-based or fruit-based, product and spreads out naturally into a thin layer, like a broad helical stripe, from the bottom of the packaging container into which it is introduced, to the top of this container.

After cooling, the dessert obtained thus appears to be a superimposed succession of layers of milk, cereal-based, vegetable-based or fruit-based, product and of thin layers of crunchy composition.

The metered products are preferably, but not exclusively, a mousse or a cream for the fresh milk product, or a mousse or puree or gel for the fruit-based, cereal-based or vegetable-based products, and chocolate for the molten substance intended to form the crunchy composition after cooling. A fruit cracking fat based substance can, for example, be envisaged in place of the chocolate. By "fruit", it is meant fruit flavours or with fruit powder, or pulp, or fruit puree or concentrate.

The chocolate is produced, sterilized, and then conserved at between 35 and 50°C according to processes already known in the prior art, as described, for example, in documents EP 0 781 510 and EP 0 770 332. Similarly, the recipe makes use, in practice, of conventional ingredients and proportions which make it possible, despite a small thickness and while being immersed in a fresh milk product having a high Aw (water activity), to preserve the crunchiness throughout the product's shelf life (of the order of four weeks).

Such recipes are described, for example, in document EP 0 615 692, which uses specific chocolate recipes for preventing softening in a wet medium during the shelf life, in particular with little sugar.

In the case of this document, the chocolate also underwent a heat treatment which enables the crunchy preparation (of chocolate, for example) to reduce the microbial load and to render the preparation compatible with the shelf life of the fresh product.

In practice, it may be a chocolate with a low water content, preferably less than 5%, comprising predominantly cacao butter or cacao butter substitutes of vegetable origin with a controlled melting point, and with a low content of sugar and proteins having a high tendency to take up water, and therefore generally with added sweeteners and flavours so as to sweeten the bitterness.

The crunchy layer may also be predominantly made up of fats with a melting point identical to cacao butter, and containing specific ingredients for giving it a note that is fruity, of caramel or white chocolate, for example.

The chocolate used has, in practice, a viscosity of less than 0.1 Pa.s (100 cPS) at 50°C.

The chilled dessert in accordance with the invention can typically comprise, in this regard, fermented milk-based products, of "fromage blanc" (also known as "fromage frais") type, and yoghurt-based products.

Such a milk product is also produced and sterilized according to conventional processes. The intermediate storage and metering temperatures are also those conventionally used for fresh milk products, without any specific constraint, in general between 10 and 15°C.

More generally, according to preferred arrangements, optionally taken in combination:
- the dessert is introduced into a packaging container, preferably a pot;
- the molten substance is injected into the metering nozzle in an adjustable manner;
- the milk, cereal-based, vegetable-based or fruit-based product intended for each of the orifices is injected into the metering nozzle in an adjustable manner;
- the adjustable injection is obtained by servocontrol;
- the nozzle rotates around a vertical axis, preferably in a servocontrol-adjusted manner, so as to give the first and second ribbons and the layer of molten substance their helical structure, the number of revolutions being greater than 2, preferably equal to 4 or 5 ; or alternatively the pot rotates - preferably around a vertical axis and preferably in a servo-controlled manner - and the feeding nozzle is stationery, so as to give the first and second ribbons and the layer of molten substance their helical structure, the number of revolutions being equal to or greater than 2, preferably comprised between 3 and 7, more preferably equal to 4 or 5.
- the nozzle also moves upwards during metering, preferably in a servocontrol-adjusted manner;
- the metering of each of the milk, cereal-based, vegetable-based or fruit-based product ribbons is carried out through a slot-shaped orifice, preferably in the shape of a buttonhole;
- said at least one molten substance outlet orifice is a circular orifice;
- the application of the helical layer of molten substance is carried out by means of three aligned orifices, the two milk, cereal-based, vegetable-based or fruit-based product outlet orifices being angled away from the vertical axis of rotation and placed on either side of the molten substance outlet orifices;
- the molten substance can be molten chocolate, preferably prepared according to a recipe based on fat, in particular on cacao butter, suitable for remaining crunchy throughout the shelf life of the dessert item; alternatively, it can be a cracking fat based substance comprising fruit flavours, or fruit added as a powder, concentrate, puree, or similar.
- the chocolate has a viscosity of less than 0.1 Pa.s (100 cPs) at 50°C;
- the chocolate is metered at a temperature of between 35 and 50°C, preferably at approximately 45°C;
- the milk product is a mousse or a cream, and alternatively if the milk product is replaced by a cereal-based, vegetable-based or fruit-based compositions, then such composition can be a purse, a mousse, or a gel; and
- the milk, cereal-based, vegetable-based or fruit-based product is metered at a temperature of between 4 and 20°C. preferably between 13 and 20°C,

The invention also proposes a chilled dessert item obtained according to the process as defined above.

There is also described a unit for producing a chilled dessert item containing a crunchy composition arranged in superimposed layers in its mass, compring:
- a metering nozzle mounted to rotate around a vertical axis and comprising two slot-shaped metering orifices for a milk, cereal-based, vegetable-based or fruit-based, product, angled away from the axis and placed on either side of at least one outlet orifice for a molten substance intended to form the crunchy composition after cooling;
- means for continuously feeding the nozzle with milk, cereal-based, vegetable-based or fruit-based, product and molten substance; and
- servocontrol means for adjust the feeding of the nozzle with milk, cereal-based, vegetable-based or fruit-based, product and molten substance.

According to preferred arrangements, optionally taken in combination, of this production unit:
- servocontrol means for adjusting the speed of rotation of the metering, nozzle are provided;
- means for the translational movement of the metering nozzle, preferably adjusted by servocontrol means, are provided;
- the servocontrol means are of the brushless motor type;
- the two slot-shaped orifices are in the shape of a buttonhole; and
- said at least one molten substance outlet orifice is a circular orifice.

### Brief description of the drawings

The invention will be understood more clearly from the description hereinafter, produced from the viewpoint of the attached drawings. In these drawings:
- Figure 1 is a schematic view of a metering and dispensing unit for carrying out the process for producing a chilled dessert item in accordance with the invention;
- Figure 2 is a very schematic, partial axial sectional view of a metering head;
- Figure 3 is a view in the plane from below the nozzle of the metering head represented in Figure 2 ;
- Figures 4a and 4b are very schematic sectional views along lines IVa-IVa and IVb-IVb of Figure 3, respectively; and
- Figure 5 is a schematic axial sectional view of a chilled dessert item obtained by means of the production process in accordance with the invention.

### Detailed description of the invention

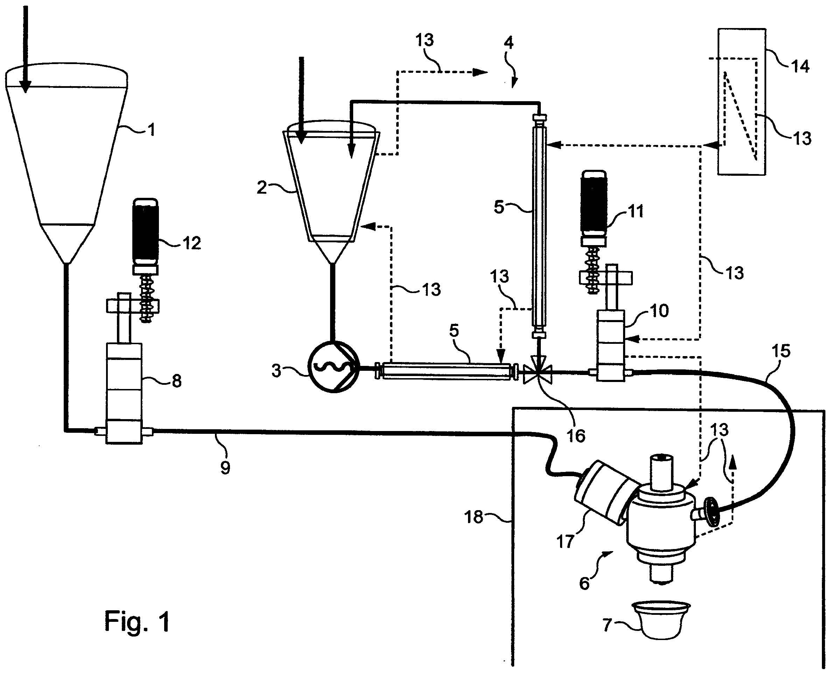

In the preferred embodiment of the invention represented in Figure 1, a fresh milk product, in this case in the form of a mousse, is recovered in a hygienic buffer container 1 under adjusted sterile air pressure.

Chocolate is also recovered in a jacketed hygienic buffer container 2 under sterile air, at a temperature of between 35 and 50°C, preferably at approximately 45°C.

It is continually circulated by means of a positive pump 3 and of a dosed circuit (closed recirculation loop 4) made up of jacketed pipes 5.

The dose of milk product is continuously and adjustably pushed out to a metering head 6 and then into a pot 7 by means of a hygienic metering device of metering piston cylinder 8 type placed on the milk product feed line connecting the buffer container 1 to the metering head 6.

The dose of chocolate is itself continuously and adjustably pushed out by means of a metering piston cylinder 10. This piston is advantageously equipped with a jacket (not represented) for adjusting the temperature and thus preventing any risk of the chocolate hardening.

The continuous pushing of the chocolate in this metering piston cylinder 10 is in this case controlled by means of an electric motor of servomotor type 11, also called "brushless" motor, and commonly used by those skilled in the art four tricky meterings. The chocolate is thus continuously and adjustably injected into the metering head 6, throughout the phase of expulsion of the milk product (mousse), from the bottom of the pot 7 to the end of the metering of the mousse.

The same is also true for said mousse, due to the fact that the metering piston cylinder 8 is, in this case, also coupled to a servomotor 12.

Such servocontrolled metering pistons are in particular sold by the companies that supply ultraclean packaging lines, such as Erca, Nova or Hassia, for example under reference Erca DM300 (for metering the mousse) and, with a rotating flap valve, from the company Doselec for the chocolate.

Moreover, the temperature of the chocolate is adjusted by means of a heat-transfer fluid (in this case, hot water) circulating in a circuit 13 represented as dashed lines in Figure 1 and feeding the jackets of the buffer container 2, the pipes 5, the metering piston cylinder 10 and the metering head 6.

A heat exchanger 14 makes it possible to reheat the heat-transfer fluid by means of steam.

It will also be observed that the metering piston cylinder 10 is placed on a feed line 15 for feeding the metering head 6 with chocolate, which is connected, by one of its ends, to the recirculation loop 4, preferably via an adjustable three-way valve 16.

For its part, the mousse feed line 9 is connected to the metering head 6 by means of a membrane valve 17 which equips this head and makes it possible, as needed, to instantly cut off the mousse-feed to this head 6.

The entire system, as has just been described with reference to Figure 1, is in practice used in such a way as to meet the hygiene requirements described, in the profession, as "ultraclean", and comprising, in particular, in situ cleaning.

In addition, since the chilled dessert item in accordance with the invention and obtained by virtue of the metering unit represented in Figure 1 must have a shelf life of more than three weeks, the metering is carried out in a filtered-air laminar flow chamber 18 in which the pots to be filled circulate. The latter are, for example, carried by a conveyor belt (not represented) that passes step by step under the metering head 6.

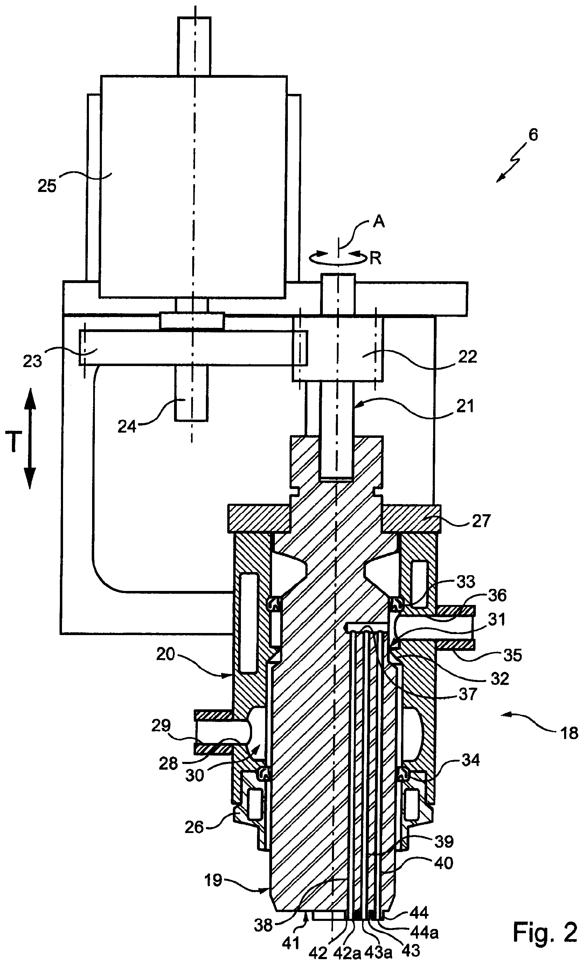

The metering head 6 is represented in greater detail in Figure 2.

This metering head 6 comprises a dispensing nozzle 18 comprising a rotating nozzle body 19 mounted in a hollow sleeve 20 forming a lining of this body 19 in the upper region of the latter.

In the example represented, the nozzle body 19 is connected to a control rod 21, by any appropriate means, in this case by screwing.

This control rod 21 has a toothed collar 22 which meshes with a toothed wheel 23 mounted on the output shaft 24 of a motor 25, which have not been represented sectionally in Figure 2.

As regards conventional means for driving the rotation of a rotating nozzle body, the elements which have just been described will not be described in greater detail here.

The motor 25 is able to cause the control rod 21 and therefore the nozzle body 19 coupled to this rod to rotate, as indicated by the double-headed arrow R.

Using any appropriate means for raising and descending, such as a screw (not represented), the assembly consisting of the metering nozzle 18 and the means for driving the rotation thereof can also be moved translationally along the direction of the axis A of rotation of the nozzle body 19, as indicated by the double-headed arrow T.

The end of the nozzle body 19 opposite that via which it is linked to the drive means is mounted in a second hollow sleeve 26 in which circulates - as, moreover, in the sleeve 20 - the heat-transfer fluid intended to adjust the temperature of the chocolate in order to keep it in the molten state until it is ejected from the metering nozzle 18.

This second sleeve 29 is fastened to the sleeve 20 and is fixed to the latter by any appropriate means, for example screwing (not represented), while the upper end of the sleeve 20 is capped with a disc 27, in which there is an opening for the nozzle body 19 to pass through. Moreover, this sleeve 20 comprises, here in the vicinity of the sleeve 26, a bore 28 which communicates with an outlet aperture 29 of the membrane valve 17 (partially represented in this Figure 2).

This bore 28 opens, at its end opposite that which communicates with the aperture 29, into a lower annular dispensing chamber 30 for dispensing the fresh milk product. This lower chamber is, here, formed by a hollow in the sleeve 20.

This lower dispensing chamber 30 is separated from an upper dispensing chamber 31 for dispensing the chocolate by an internal annular projection 32 of the sleeve 20.

The upper and lower chambers 31, 30 are, here, each delimited axially by a leak-tight seal 33, 34 interposed between the rotating nozzle body 19 and the sleeve 20.

The sleeve 20 comprises, moreover, a fitted part 35 for feeding the metering head 6 with chocolate, which communicates with a bore 36 in the sleeve 20, which opens into the upper chamber 31.

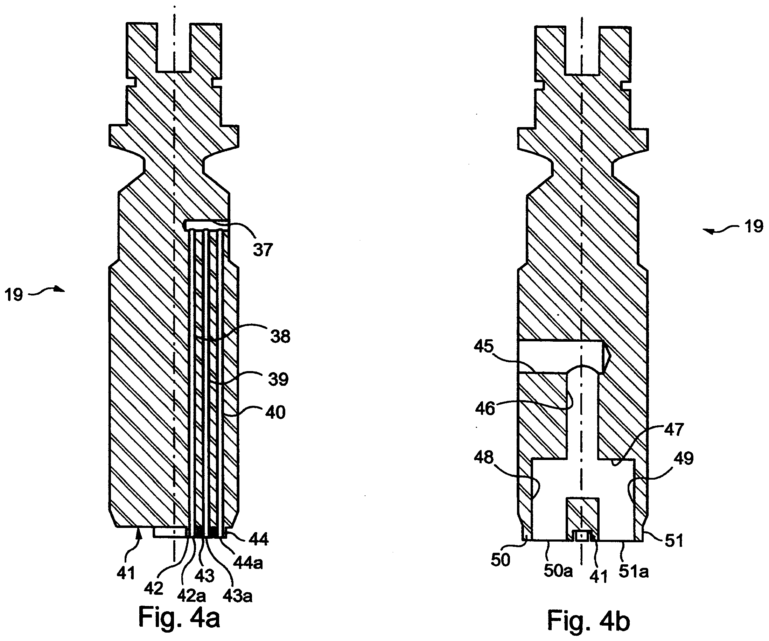

As is seen in Figures 2 and 4a, the upper annular chamber 31 is intended to feed with chocolate a blind radial bore 37 made in the rotating nozzle body 19.

This bore 37 opens up into the external cylindrical face of the rotating nozzle body 19 and communicates with three channels 38, 39, 40, extending parallel to the axis of rotation A, via one of their longitudinal ends.

These channels 38 to 40 extend, in this case, very slightly beyond the edge 41 of the rotating nozzle body 19 located at the end of the latter opposite that connected to the control rod 21, each by means of a tubular projection 42, 43, 44, produced, in this case, as a single component with the rotating nozzle body 19.

Each of these projections 42, 43, 44 defines a chocolate outlet orifice 42a, 43a, 44a and makes it possible advantageously to prevent contact and "sticking" phenomena during metering.

Similarly (see Figure 4b), the lower annular chamber 30 is intended to feed with mousse a radial bore 45 made in the rotating nozzle body 19. This bore 45 is also blind and itself also opens onto the external cylindrical face of this rotating nozzle body 19.

It communicates with an axial channel 46 which extends axially to a channel 47 which is transversal to the axis A and communicates, on either side of the axial channel 46, with channels 48, 49 which each open to the exterior of the rotating nozzle body 19 via the edge 41,

These channels 48 and 49 are themselves also both extended, by means of an annular projection 50, 51, each defining a mousse outlet orifice 50a, 51a, very slightly beyond the edge 41.

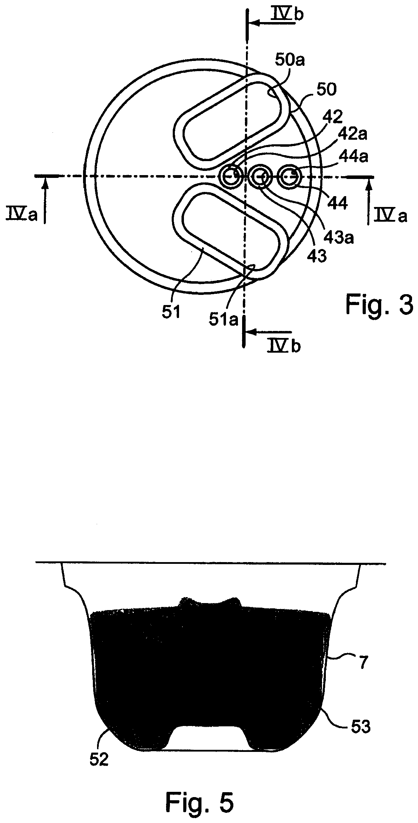

As is seen more clearly in Figure 3. these orifices 50a, 51 a are in the shape of a slot, more specifically in the shape of a buttonhole, while the orifices 42a, 43a, 44a are circular orifices.

It will also be observed that the three circular chocolate outlet orifices 42a, 43a and 44a are aligned, in this preferred arrangement along a straight line intersecting the vertical axis A, and are arranged between the two mousse outlet orifices 50a and 51 a.

More specifically, the two slot-shaped orifices 50a and 51a are angled away from the axis A and placed on either side of the three outlet orifices 42a, 43a, and 44a for chocolate outlet. In other words, these mousse and chocolate outlet orifices are arranged according to a fan-shaped arrangement, the chocolate outlet orifices 42a, 43a and 44a extend halfway between each of the mousse outlet orifices 50a and 51a.

It will also be observed that, arranged in this way, these orifices extend, in the case of this preferred arrangement along a plane transversal to the axis A.

The chocolate outlet orifices 42a, 43a and 44a are, moreover, separated from one another in such a way as to cover a distance substantially equal to the length of the slot-shaped orifices 50a and 51a, while at the same time extending inside the perimeters delimited by the latter.

In practice, the chocolate outlet orifices 42a, 43a and 44a have a diameter which makes it possible to retain said chocolate by capillary action, i.e. of the order of 2 to 2.5 mm. The projections 42 to 44, and also 50 and 51, which define the various chocolate and mousse outlet orifices, go beyond the edge 41 of the rotating nozzle body 19 by approximately 5 mm.

The diameter of this nozzle body is adapted to the diameter of the pot into which the metering is carried out: it is thus, for example, of the order of 33 mm for a standard pot having an internal diameter of 55 mm and of the order of 40 mm for a thermoformed pot having an internal diameter of 65 mm.

The dimensions of the slot-shaped orifices 50a and 51 a are also adapted to the diameter of the pot into which the metering is carried out.

Preferably, the rotating nozzle body 19 is made of chromium-plated stainless steel in order to withstand the abrasion of the chocolate, Other materials can, however, be envisaged, such as glass-filled polyether ether ketone (PEEK).

The leaktight seals 33 and 34 are made of PEEK and silicone or of Viton® in order to withstand the fatty products.

The pots may be of any shape and sizes, for example square or rectangular, frustoconical, cylindrical with a circular or oval cross section. They may be opaque or transparent so as to show the contrasting layers of the various masses. Preferably, these pots are multipacks and thermoformed, filled and sealed with covers continuously by means of "form-fill-seal" equipment.

A pot 7 thus filled is represented in axial section in Figure 5.

In general, the multilayer dessert filling the pot 7 is obtained by the combined action of a phase of extrusion (continuous metering) of the two products, i.e. the mousse and the chocolate, and of helical coiling by means of the metering nozzle 18. and more particularly of its rotating nozzle body 19.

In the referred embodiment, the mousse and the chocolate are continuously and adjustable brought to the metering nozzle 18 throughout the expulsion phase, from the bottom of the pot to the end of the metering.

The chocolate is brought to the metering nozzle 18 in the molten state (temperature of the order of 45°C), while the mousse is brought to this nozzle 18 at a lower temperature, of between 13 and 20°C in the preferred embodiment.

The chocolate and the mousse were prepared according to recipes such as those described above.

During the chocolate and mousse expulsion phase, the nozzle advantageously performs a large number of revolutions, preferably greater than 2 and, in the preferred embodiment, between 4 and 5 revolutions around the axis A. This makes it possible to obtain numerous superimpositions of layers and a final appearance of the product where the layers appear to be virtually horizontal. In this regard, it should be noted that, advantageously, part of the rotation of the rotating nozzle body can be carried out in the clockwise direction and the rest in the anticlockwise direction.

In order to prevent the whirls of the products falling in lumps, and so that, on the contrary, they are correctly placed and spread out in evenly superimposed layers in the pot 7, the rotating nozzle body 19 moves from the bottom upwards along the direction of the double-headed arrow T, at a speed that is adjusted according to the product expulsion speed.

In turning, the chocolate is thus deposited in a thin layer (in practice, the thickness is between 0.3 mm and 1 mm, advantageously of the order of 0.5 mm) on the mousse and covered with the mousse from the expulsion orifice which follows.

More specifically:
- a helical ribbon of mousse is continuously metered through one of the orifice 50a and 51 a;
- a layer of chocolate in the molten state is applied, to this helical ribbon being formed, continuously from the beginning of it being formed to the end of it being metered, by metering through the orifices 42a, 43a and 44a; and
- the helical layer of chocolate thus being formed is trapped between the first ribbon of mousse and a second helical ribbon of mousse, by concomitantly and continuously metering the second ribbon of mousse through the second of the two orifices 50a and 51 a, such that said second ribbon is deposited onto the helical layer of chocolate being formed, simultaneously with the chocolate coming into contact with the first helical ribbon being formed.

In other words, the flow/expansion of mousse exceeds and traps the chocolate. The mousse thus in particular reaches the pot 7 before the chocolate, which is driven in the direction of the pot by the mousse development/flow forces. This makes it possible to prevent, as indicated above, the chocolate driven from the centre to the periphery sticking to the pot and then rising to the top as the filling takes place. In this regard, it should be pointed out that the drawback that comes from the fact of having chocolate on the side wall(s) of the pot is that said chocolate sticks to the pot and is then difficult to get out with a spoon when the product is eaten.

During the filling, the parameters of speed and flow rate of ejection of the two products are of course controlled by means of the servocontrol systems described above. The same is true of the speed at which the metering nozzle 18 rotates and ascends.

By virtue of these arrangements, during the cooling which follows the packaging operation (in cooling cells or in a tunnel, for example), the thin layer of chocolate (marked 52 on Figure 5) hardens and is, at the end, in the form of a superimposition of crunchy layers between layers of mousse 53, which crunchy layers are, when the product is eaten, easily broken under the pressure of the spoon, thereby releasing a multitude of small crunchy chocolate pieces.

Any appropriate means can be used to drive the rotation of the rotating nozzle body.

Moreover, the metering nozzle can be heated by means of electrical resistance elements instead of the heat-transfer fluid.

The two sleeves of this nozzle could, in addition, be produced by milling operations in the mass of a single block of material.

In addition, several radial bores may be made in the rotating nozzle body in order to feed the channels through which the chocolate and/or mousse pass. Grooves may themselves also be made in the rotating nozzle body in order to promote continuous feeding of the radial bores.

In an alternative embodiment of the invention (not illustrated in the drawing), the dessert is produced by feeding the different ribbons of product as well as the molten product directly into a pot that rotates relative to the nozzle, The latter is fixed, and the pot is moved in rotation preferably along a vertical axis. Also preferably, suitable mechanical means are provided which move the pot up and down, i.e. to and from the nozzle. This up and down movement helps ensuring a proper stacking of the helical layers of product.

In such an embodiment of the invention, the pots are preferably thermoformed from a flat thermoplastic sheet, and cut away from the thermoformed sheet after the thermoforming so as to obtain independent separate pots before the dosing step.

In all of the aspects of the present invention mentioned above, at least one of the ribbons of fresh milk product can have a pH lower than 7, preferably a pH comprised between 3 and 6.

In one further embodiment of the invention, the first and second ribbons are made of a fruit-based composition. Also, such a fruit-based product as a pH preferably lower than 7, more preferably comprised between 3 and 6.

The said fruit-based composition can be either a gel, puree or mousse.

If the fruit-based product is a gel of a mousse, it preferably comprises a gelling agent such as a pectin, starches, gelatine, alginate or a gum.

One example of fruit gel composition is as follows:
- Water 46.5438%
- Raspberry purree concentrate 30.000%
- Sugar 8.000%
- Rice powder 2.200%
- Gelatine 1.000%
- Emulsifier 0.3500%
- Modified starch 1.2000%
- Coloring agent 0.0702%
- Flavour 0.0360%
- Glucose syrup 10.6000%

In a further embodiment of the present invention, the layer of molten substance intended to form the crunchy composition after cooling, which is applied between the first and second ribbons of fresh-milk or fruit-based product, comprises a fruit-fat based composition that preferably comprises added fat matter in an amount comprised between 70% and 99% by weight of the product, and a reduced amount of fruit powder, so that the amount of fruit in the said fruit-based molten composition is less than 20 % by weight of composition.

As can be understood from the above, the present invention provides a technical solution for producing a dessert having at least one cracking layer of chocolate or fruit-based composition, entrapped between helical ribbon layers of a milk-based or fruit-based composition having the form of a cream, mousse, gel, or other suitable form.

## Claims

1. A process for producing a chilled dessert item containing a crunchy composition arranged in superimposed layers in its mass, comprising the following steps:
- a helical ribbon of milk, cereal-based, vegetable-based or fruit-based, product is continuously metered through a milk, cereal-based, vegetable-based or fruit-based, product outlet orifice of a metering nozzle;
- a layer of molten substance intended to form the crunchy composition after cooling is applied, to the helical ribbon being formed, continuously from the beginning of it being formed to the end of it being metered, by metering through at least one molten substance outlet orifice of said metering nozzle; and
- the helical layer of molten substance thus being formed is trapped between the first ribbon of milk, cereal-based, vegetable-based or fruit-based, product and a second helical ribbon of milk, cereal-based, vegetable-based or fruit-based, product, by concomitantly and continuously metering the second ribbon of product through a second product outlet orifice of the metering nozzle, such that said second ribbon is deposited onto the helical layer of molten substance being formed, simultaneously with the molten substance coming into contact with the first helical ribbon being formed.

2. A process according to claim 1, wherein the dessert is introduced into a packaging container, preferably a pot.

3. A process according to any one of the preceding claims, wherein the molten substance is injected into the metering nozzle in an adjustable manner.

4. A process according to any of the preceding claims, wherein the milk, cereal-based, vegetable-based or fruit-based, product intended for each of the orifices is injected into the metering nozzle in an adjustable manner.

5. A process according to any of the claims 3 or 4, wherein the adjustable injection is obtained by servo-control.

6. A process according to any one of the preceding claims, wherein the nozzle rotates around a vertical axis, preferably in a servo-control adjusted manner, so as to give the first and second ribbons and the layer of molten substance their helical structure, the number of revolutions being equal to or greater than 2, preferably equal to 4 or 5.

7. A process according to claim 6, wherein the nozzle also moves upwards during metering, preferably in a servo-control-adjusted manner.

8. A process according to claims 2 to 5, wherein the first and second ribbons as well as the molten substance layer acquire a helical structure by rotating the pot relative to the nozzle during the dosing step, the number of rotations of the pot being preferably equal to or higher than 2, more preferably comprised between 3 and 7, even more preferably equal to 4 or 5.

9. A process according to claim 8, which further comprises moving the pot up and down during the dosing step, so as to ensure a stacking of the helical layers.

10. A process according to any one of the preceding claims, wherein the metering of each of the milk, cereal-based, vegetable-based or fruit-based product ribbons is carried out through a slot-shaped orifice, preferably in the shape of a buttonhole.

11. A process according to any one of the preceding claims, wherein said at least one molten substance outlet orifice is a circular orifice.

12. A process according to claims 6 or 11, wherein the application of the helical layer of molten substance is carried out by means of three aligned orifices, the two milk, cereal-based, vegetable-based or fruit-based product outlet orifices being angled away from the vertical axis of rotation and placed on either side of the molten substance outlet orifices.

13. A process according to any one of the preceding claims, wherein the molten substance is molten chocolate, preferably prepared according to a recipe based on fat, in particular on cacao butter, suitable for remaining crunchy throughout the shelf life of the dessert item.

14. A process according to claim 13, wherein the chocolate has a viscosity of less than 0.1 Pa.s (100 cPs) at 50°C.

15. A process according to either one of claims 13 and 14, wherein the chocolate is metered at a temperature of between 35 and 50°C, preferably at approximately 45°C.

16. A process according to any one of the preceding claims 1 to 11, wherein the molten substance is a fruit fat-based composition comprising at least one added fat ingredient in an amount comprised between 80 and 99 % by weight of said molten substance, and wherein the amount of fruit in said molten substance is lower than 20 % by weight of composition.

17. A process according to any one of the preceding claims 1 to 16, wherein the milk product is a mousse or a cream.

18. A process according to any of the preceding claims 1 to 16, wherein the fruit-based, cereal-based or vegetable-based product is a puree, a mousse, or a gel.

19. A process according to any one of the preceding claims, wherein the milk, cereal-based, vegetable-based or fruit-based product is metered at a temperature of between 4 and 20°C, preferably between 13 and 20°C.

20. A dessert item obtained according to the process as defined in any one of the preceding claims.

21. A dessert item according to claim 20. which comprises at least one layer of milk, cereal-based, vegetable-based or fruit-based, product which has a pH lower than 7, preferably a pH comprised between 3 and 6.

## Patentansprüche

1. Verfahren zum Herstellen eines gekühlten Süßspeiseartikels, der eine knusprige Zusammensetzung enthält, die in übereinander liegenden Schichten in seiner Masse angeordnet ist, umfassend die folgenden Schritte:
- ein spiralförmiges Band aus Milch-, cerealienbasiertem, pflanzenbasiertem oder obstbasiertem Produkt wird kontinuierlich durch eine Auslassöffnung für Milch-, cerealienbasiertes, pflanzenbasiertes oder obstbasiertes Produkt einer Abmessdüse abgemessen;
- eine Schicht aus geschmolzenem Stoff, der zum Bilden der knusprigen Zusammensetzung bestimmt ist, wird nach dem Abkühlen kontinuierlich ab Beginn ihrer Bildung bis zum Ende ihrer Abmessung auf das gebildete spiralförmige Band aufgetragen, indem es durch mindestens eine Auslassöffnung für geschmolzenen Stoff der Abmessdüse abgemessen wird; und
- die spiralförmige Schicht aus geschmolzenem Stoff, die auf diese Weise gebildet wird, wird zwischen dem ersten Band aus Milch-, cerealienbasiertem, pflanzenbasiertem oder obstbasiertem Produkt und einem zweiten spiralförmigen Band aus Milch-, cerealienbasiertem, pflanzenbasiertem oder obstbasiertem Produkt durch gleichzeitiges und kontinuierliches Abmessen des zweiten Bandes von Produkt durch eine zweite Produktauslassöffnung der Abmessdüse eingeschlossen, sodass das zweite Band auf die gebildete spiralförmige Schicht von geschmolzenem Stoff abgeschieden wird, wobei der geschmolzene Stoff gleichzeitig mit dem ersten spiralförmigen Band in Kontakt tritt, das gebildet wird.

2. Verfahren nach Anspruch 1, wobei die Süßspeise in einen Verpackungsbehälter, vorzugsweise ein Gefäß eingeführt wird.

3. Verfahren nach einem der vorstehenden Ansprüche, wobei der geschmolzene Stoff auf einstellbare Weise in die Abmessdüse gespritzt wird.

4. Verfahren nach einem der vorhergehenden Ansprüche, wobei das Milch-, cerealienbasierte, pflanzenbasierte oder obstbasierte Produkt, das für jede der Öffnungen bestimmt ist, auf eine einstellbare Weise in die Abmessdüse gespritzt wird.

5. Verfahren nach einem der Ansprüche 3 oder 4, wobei die einstellbare Einspritzung durch Servosteuerung erhalten wird.

6. Verfahren nach einem der vorstehenden Ansprüche, wobei sich die Düse vorzugsweise auf eine servogesteuerte eingestellte Art und Weise um eine vertikale Achse dreht, um dem ersten und dem zweiten Band und der Schicht aus geschmolzenem Stoff ihre spiralförmige Struktur zu verleihen, wobei die Anzahl von Umdrehungen gleich oder größer als 2, vorzugsweise gleich 4 oder 5 ist.

7. Verfahren nach Anspruch 6, wobei sich die Düse während des Abmessens vorzugsweise auf eine servogesteuerte eingestellte Weise auch nach oben bewegt.

8. Verfahren nach Anspruch 2 bis 5, wobei das erste und das zweite Band sowie die Schicht aus geschmolzenem Stoff durch Drehen des Gefäßes in Bezug auf die Düse während des Dosierschrittes eine spiralförmige Struktur erhalten, wobei die Anzahl von Drehungen des Gefäßes vorzugsweise gleich oder höher als 2 ist, mehr bevorzugt zwischen 3 und 7 liegt, noch mehr bevorzugt gleich 4 oder 5 ist.

9. Verfahren nach Anspruch 8, ferner umfassend das Bewegen des Gefäßes nach oben und nach unten während des Dosierschrittes, um eine Stapelung der spiralförmigen Schichten sicherzustellen.

10. Verfahren nach einem der vorstehenden Ansprüche, wobei das Abmessen jedes der Bänder aus Milch-, cerealienbasiertem, pflanzenbasiertem oder obstbasiertem Produkt durch eine schlitzförmige Öffnung, vorzugsweise in Form eines Knopflochs ausgeführt wird.

11. Verfahren nach einem der vorstehenden Ansprüche, wobei die mindestens eine Auslassöffnung für geschmolzenen Stoff eine kreisförmige Öffnung ist.

12. Verfahren nach Anspruch 6 oder 11, wobei die Aufbringung der spiralförmigen Schicht aus geschmolzenem Stoff mittels drei ausgerichteten Öffnungen ausgeführt wird, wobei die zwei Öffnungen für Milch-, cerealienbasiertes, pflanzenbasiertes oder obstbasiertes Produkt von der vertikalen Drehachse abgewinkelt sind und auf jeder Seite der Auslassöffnungen für geschmolzenen Stoff angeordnet werden.

13. Verfahren nach einem der vorstehenden Ansprüche, wobei der geschmolzene Stoff geschmolzene Schokolade ist, die vorzugsweise gemäß einem Rezept hergestellt wird, das auf Fett, insbesondere auf Kakaobutter basiert, und die geeignet ist, während der gesamten Lagerbeständigkeit des Süßspeiseartikels knusprig zu bleiben.

14. Verfahren nach Anspruch 13, wobei die Schokolade eine Viskosität von weniger als 0,1 Pa.s (100 cPs) bei 50 °C aufweist.

15. Verfahren nach einem der Ansprüche 13 und 14, wobei die Schokolade bei einer Temperatur zwischen 35 und 50 °C, vorzugsweise bei ungefähr 45 °C abgemessen wird.

16. Verfahren nach einem der vorstehenden Ansprüche 1 bis 11, wobei der geschmolzene Stoff eine obst-fett-basierte Zusammensetzung ist, die mindestens einen zugesetzten Fettbestandteil in einer Menge zwischen 80 und 99 Gew.-% des geschmolzenen Stoffs umfasst, und wobei die Obstmenge in dem geschmolzenen Stoff weniger als 20 Gew.-% der Zusammensetzung beträgt.

17. Verfahren nach einem der vorstehenden Ansprüche 1 bis 16, wobei das Milchprodukt ein Mousse oder eine Creme ist.

18. Verfahren nach einem der vorstehenden Ansprüche 1 bis 16, wobei das obstbasierte, cerealienbasierte oder pflanzenbasierte Produkt ein Püree, ein Mousse oder ein Gel ist.

19. Verfahren nach einem der vorstehenden Ansprüche, wobei das Milch-, cerealienbasierte, pflanzenbasierte oder obstbasierte Produkt bei einer Temperatur zwischen 4 und 20 °C, vorzugsweise zwischen 13 und 20 °C abgemessen wird.

20. Süßspeiseartikel, der gemäß dem Verfahren nach einem der vorstehenden Ansprüche erhalten wird.

21. Süßspeiseartikel nach Anspruch 20, der mindestens eine Schicht aus Milch-, cerealienbasiertem, pflanzenbasiertem oder obstbasiertem Produkt umfasst, wobei das Produkt einen pH-Wert unter 7, vorzugsweise einen pH-Wert zwischen 3 und 6 aufweist.

## Revendications

1. Procédé de préparation d'un article de dessert frais contenant une composition croustillante placée en couches superposées dans sa pâte, comprenant les étapes suivantes :
- un ruban hélicoïdal de produit laitier, à base de céréales, à base de légumes ou à base de fruits, est continuellement dosé à travers un orifice de sortie de produit laitier, à base de céréales, à base de légumes ou à base de fruits d'une buse doseuse ;
- une couche de substance fondue destinée à former la composition croustillante après application d'un refroidissement au ruban hélicoïdal qui se forme continuellement à partir du commencement de sa formation jusqu'à la fin de son dosage, en dosant à travers au moins un orifice de sortie de substance fondue de ladite buse doseuse ; et
- la couche hélicoïdale de substance fondue qui est ainsi formée est piégée entre le premier ruban de produit laitier, à base de céréales, à base de légumes ou à base de fruits et un second ruban hélicoïdal de produit laitier, à base de céréales, à base de légumes ou à base de fruits, en dosant simultanément et continuellement le second ruban de produit à travers le second orifice de sortie de produit de la buse doseuse, de sorte que le second ruban est déposé sur la couche hélicoïdale de substance fondue en formation, en même temps que la substance fondue entre en contact avec le premier ruban hélicoïdal en formation.

2. Procédé selon la revendication 1, dans lequel le dessert est introduit dans un contenant d'emballage, de préférence un pot.

3. Procédé selon l'une quelconque des revendications précédentes, dans lequel la substance fondue est injectée dans la buse doseuse d'une façon ajustable.

4. Procédé selon l'une quelconque des revendications précédentes, dans lequel le produit laitier, à base de céréales, à base de légumes ou à base de fruits, destiné à chacun des orifices est injecté dans la buse doseuse d'une façon ajustable.

5. Procédé selon l'une quelconque des revendications 3 ou 4, dans lequel l'injection ajustable est obtenue par servocommande.

6. Procédé selon l'une quelconque des revendications précédentes, dans lequel la buse pivote autour d'un axe vertical, de préférence d'une façon ajustée et servo-commandée, afin de donner aux premier et second rubans et à la couche de substance fondue leur structure hélicoïdale, le nombre de révolutions étant égal ou supérieur à 2, de préférence égal à 4 ou 5.

7. Procédé selon la revendication 6, dans lequel la buse se déplace également vers le haut pendant le dosage, de préférence d'une façon ajustée et servo-commandée.

8. Procédé selon les revendications 2 à 5, dans lequel les premier et second rubans ainsi que la couche de substance fondue acquièrent une structure hélicoïdale en pivotant le pot par rapport à la buse pendant l'étape de dosage, le nombre de rotations du pot étant, de préférence, égal à ou supérieur à 2, mieux encore, compris entre 3 et 7 et idéalement, égal à 4 ou 5.

9. Procédé selon la revendication 8, qui comprend en outre le déplacement du pot vers le haut et vers le bas pendant l'étape de dosage, afin d'assurer un empilement des couches hélicoïdales.

10. Procédé selon l'une quelconque des revendications précédentes, dans lequel le dosage de chacun des rubans de produit laitier, à base de céréales, à base de légumes ou à base de fruits, est réalisé à travers un orifice en forme de fente, de préférence en forme de boutonnière.

11. Procédé selon l'une quelconque des revendications précédentes, dans lequel ledit au moins un orifice de sortie de substance fondue est un orifice circulaire.

12. Procédé selon les revendications 6 ou 11, dans lequel l'application d'une couche hélicoïdale de substance fondue est réalisée au moyen de trois orifices alignés, les deux orifices pour produit laitier, à base de céréales, à base de légumes ou à base de fruits, étant inclinés à l'écart de l'axe vertical de rotation et placés de part et d'autre des orifices de sortie de substance fondue.

13. Procédé selon l'une quelconque des revendications précédentes, dans lequel la substance fondue est du chocolat fondu, préparé de préférence selon une recette à base de graisse, en particulier à base de beurre de cacao, approprié pour rester croustillant durant toute la durée de conservation de l'article de dessert.

14. Procédé selon la revendication 13, dans lequel le chocolat a une viscosité inférieure à 0,1 Pa.s (100 cP) à 50 °C.

15. Procédé selon l'une ou l'autre des revendications 13 et 14, dans lequel le chocolat est dosé à une température entre 35 et 50 °C, de préférence d'environ 45 °C.

16. Procédé selon l'une quelconque des revendications 1 à 11, dans lequel la substance fondue est une composition à base de fruits contenant au moins un ingrédient gras ajouté en une quantité comprise entre 80 et 99 % en poids de ladite substance fondue, et dans lequel la quantité de fruits dans ladite substance fondue est inférieure à 20 % en poids de la composition.

17. Procédé selon l'une quelconque des revendications 1 à 16, dans lequel le produit laitier est une mousse ou une crème.

18. Procédé selon l'une quelconque des revendications précédentes 1 à 16, dans lequel le produit à base de céréales, à base de légumes ou à base de fruits est une purée, une mousse ou un gel.

19. Procédé selon l'une quelconque des revendications précédentes, dans lequel le produit laitier, à base de céréales, à base de légumes ou à base de fruits est dosé à une température entre 4 et 20 °C, de préférence entre 13 et 20 °C.

20. Article de dessert obtenu selon le procédé défini dans l'une quelconque des revendications précédentes.

21. Article de dessert selon la revendication 20, qui comprend au moins une couche de produit laitier à base de céréales, à base de légumes ou à base de fruits qui a un pH inférieur à 7, de préférence un pH compris entre 3 et 6.
